# EUROPÄISCHE PATENTSCHRIFT

(11) **EP 0 679 136 B1**
(45) Veröffentlichungstag und Bekanntmachung des Hinweises auf die Patenterteilung: **10.06.1998**
(21) Anmeldenummer: 94916897.5
(22) Anmeldetag: 10.06.1994
(51) Int. Cl.: B65B 43/56, B65B 59/00, B65G 35/08

(54) **VORRICHTUNG ZUM INTERMITTIERENDEN TRANSPORT VON BEHÄLTNISSEN**
DEVICE FOR INTERMITTENTLY CONVEYING CONTAINERS
DISPOSITIF DE TRANSPORT INTERMITTENT DE RECIPIENTS

(30) Priorität: 21.06.1993 DE 4320477
(43) Veröffentlichungstag der Anmeldung: 02.11.1995
(73) Patentinhaber: ROBERT BOSCH GMBH, 70442 Stuttgart (DE)
(72) Erfinder: SCHOTT, Helmut, D-74589 Satteldorf (DE)
(86) Internationale Anmeldenummer: DE9400649
(87) Internationale Veröffentlichungsnummer: WO9500397

(56) Entgegenhaltungen:
- DE-A- 3 918 072
- US-A- 3 610 391

## Beschreibung

### Stand der Technik

Die Erfindung geht aus von einer Vorrichtung zum intermittierenden Transport von Behältnissen nach dem Oberbegriff des Anspruchs 1. Bei einer derartigen aus der DE-PS 28 53 103 bekannten Vorrichtung zum Zuführen von Behältnissen zu einer Befüllstation sind die Träger hintereinander auf zwei übereinander angeordneten Führungsbahnen aufgereiht, wobei die Behältnisse den Trägern in der unteren Führungsbahn zugeführt und nach Umsetzen dieser in die obere Führungsbahn an der Befüllstation befüllt werden. Zum Umsetzen der Träger ist an den beiden Enden der Führungsbahnen jeweils eine Umsetzeinrichtung mit einem Schwenkarm angeordnet, der die ankommenden Träger von der oberen in die untere Führungsbahn bzw. umgekehrt umsetzt. Der Schwenkarm schwenkt dazu jeweils einen Träger aus der ersten Führungsbahn heraus, dreht ihn in einer zu der Förderrichtung parallelen Achse, und setzt ihn anschließend um 90° gekippt in die zweite Führungsbahn ein. Nachteilig bei der bekannten Vorrichtung ist, daß lediglich entlang der oberen Führungsbahn Bearbeitungsstationen angeordnet werden können, so daß die Anordnung mehrerer Bearbeitungsstationen auf die Länge der oberen Führungsbahn beschränkt ist. Zum Durchführen mehrerer Bearbeitungsschritte baut daher die obere Führungsbahn sehr lang, wodurch die bekannte Vorrichtung einen hohen Platzbedarf hat. Weiterhin werden die Behältnisse bei jedem Maschinentakt um jeweils einen Schritt weitergeschoben, so daß der Maschinentakt und somit die Leistung der Vorrichtung von der längsten Bearbeitungsdauer abhängig ist. Die Leistung der bekannten Vorrichtung ist deshalb verhältnismäßig gering.

### Vorteile der Erfindung

Die erfindungsgemäße Vorrichtung mit den kennzeichnenden Merkmalen des Anspruchs 1 hat demgegenüber den Vorteil, daß sowohl der Vorlauf- als auch der Rücklaufbahn Bearbeitungsstationen zugeordnet werden können, wodurch die erfindungsgemäße Vorrichtung besonders kompakt und übersichtlich baut. Durch die Kinematik der Umsetzeinrichtung ergibt sich ferner, daß die Behältnisträger auf sich bezogen stets in der gleichen Richtung gefördert werden, so daß sie im Verband jeweils gegen die gleiche Seite der benachbarten Behältnisträger anschlagen. Durch die an den Behältnisträgern ausgebildeten Verzahnungen ist es in Verbindung mit mehreren an den Vorlauf- und Rücklaufbahnen angeordneten Transportzahnrädern möglich, Bereiche intermittierender und kontinuierlicher Förderung zu bilden. Damit können die Bearbeitungszeiten der Bearbeitungsstationen an den Zonen kontinuierlicher Förderung verlängert werden, ohne daß es zu Pausen an den Bearbeitungszonen an den Zonen intermittierender Förderung kommt. Somit ist die Leistung der erfindungsgemäßen Vorrichtung bei mehreren Bearbeitungsstationen unterschiedlicher Bearbeitungsdauer besonders hoch. Durch Anordnung mindestens einer Formatwechseleinrichtung für die Behältnisträger an einer Umsetzeinrichtung kann ein vollautomatischer Formatwechsel durchgeführt werden.

Weitere Vorteile der erfindungsgemäßen Vorrichtung ergeben sich aus den Unteransprüchen und der Beschreibung.

### Zeichnung

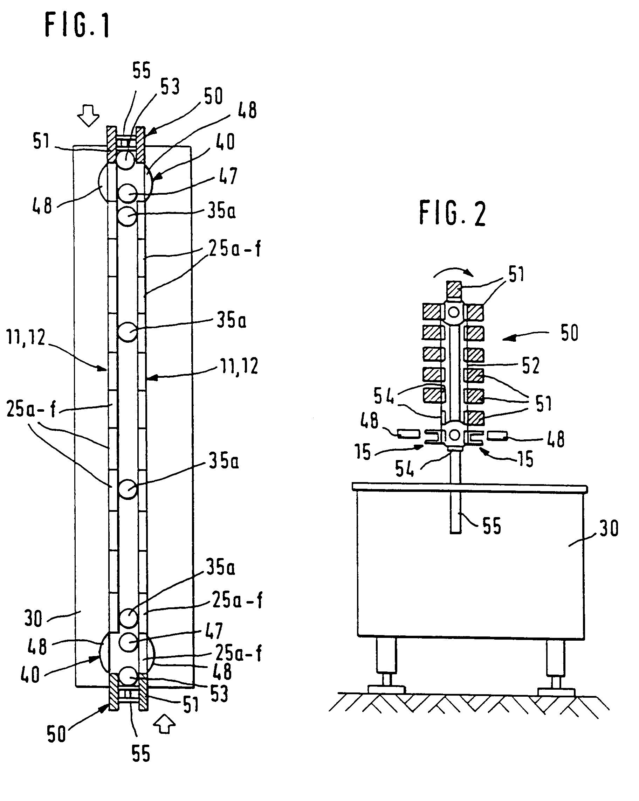

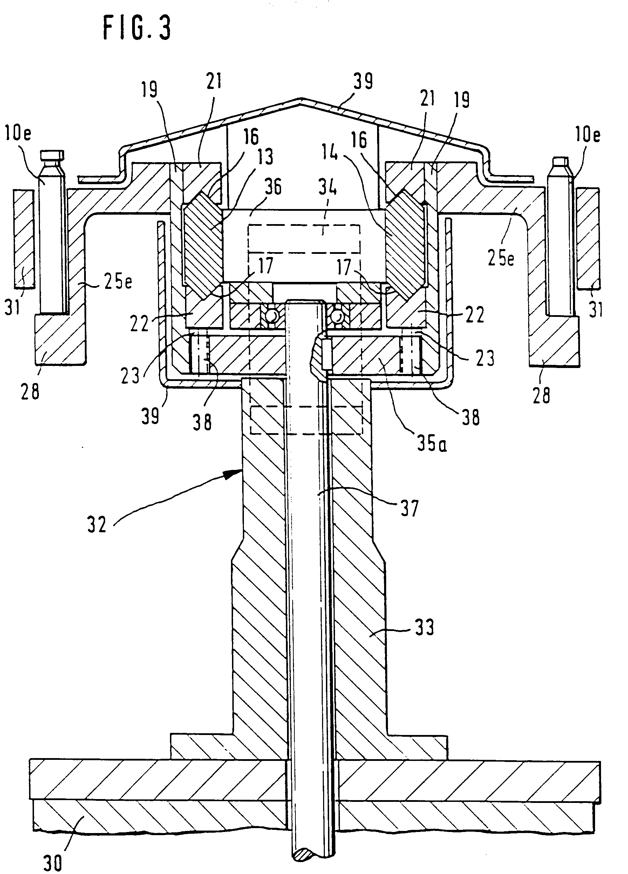

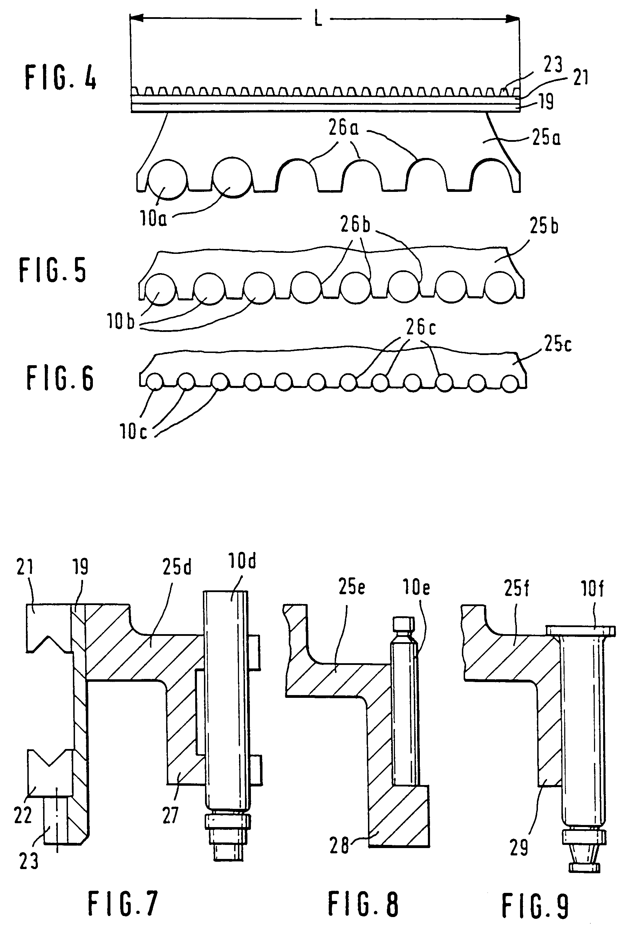

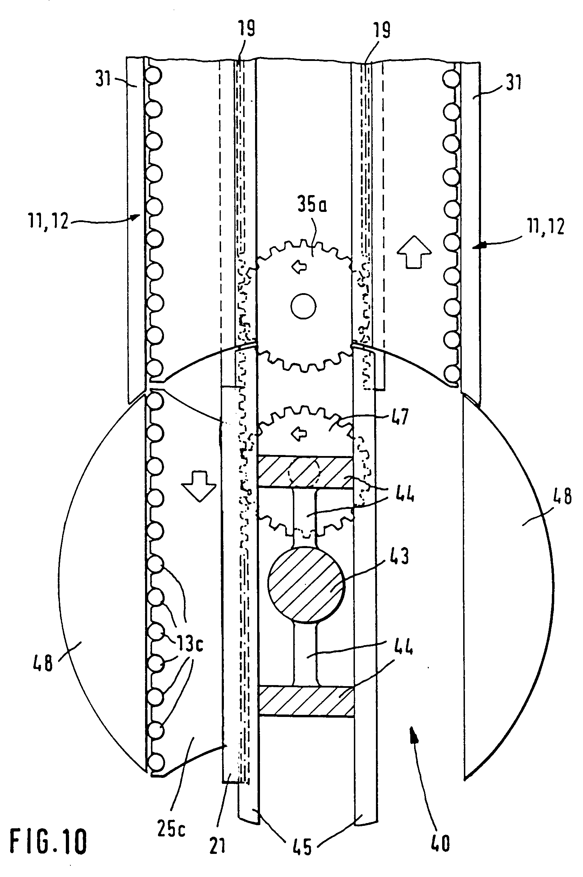

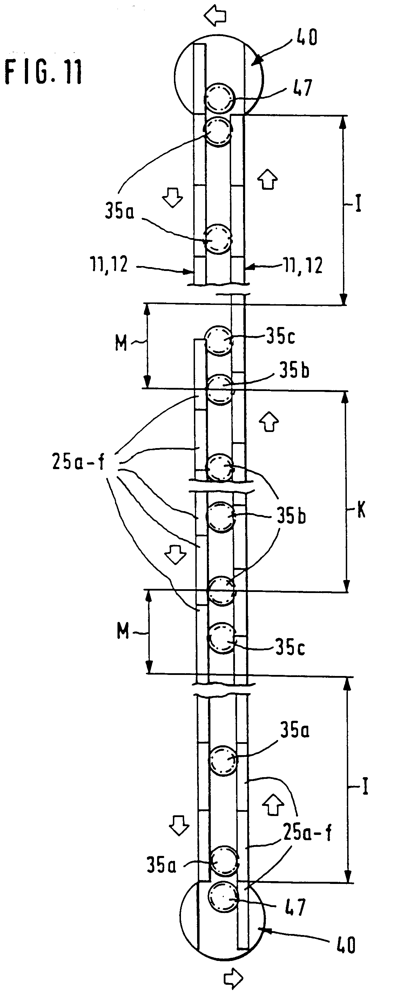

Ausführungsbeispiele der Erfindung sind in der Zeichnung dargestellt und werden in der nachfolgenden Beschreibung näher erläutert. Es zeigen Fig. 1 eine Vorrichtung zum intermittierenden Transport von Behältnissen vereinfacht in Draufsicht, Fig. 2 die Vorrichtung nach Fig. 1 vereinfacht in Vorderansicht, Fig. 3 einen Träger für Führungsschienen im Querschnitt, Fig. 4 einen Behältnisträger zur Aufnahme einer Mehrzahl von Behältnissen in Draufsicht, Fig. 5 und 6 Behältnisträger für Behältnisse mit gegenüber Fig. 4 verschiedenem Format in Draufsicht, Fig. 7 bis 9 Behältnisträger für verschiedene Behältnisse im Querschnitt, Fig. 10 eine Umsetzeinrichtung mit Führungsschienen in Draufsicht und Fig. 11 eine Vorrichtung in abgewandelter Form nach Fig. 1 vereinfacht in Draufsicht.

### Beschreibung der Ausführungsbeispiele

Die Vorrichtung zum intermittierenden Zuführen von Behältnissen 10a bis 10f zu Bearbeitungsstationen mit Füll- und Schließeinrichtungen hat in einer horizontalen Ebene zwei geradlinige Transportbahnen 11, 12 für den Vor- und Rücklauf mit je einer Führungsschiene 13, 14. Die Führungsschienen 13, 14, auf denen Behältnisträger 15 verschiebbar sind, haben eine flache sechseckige Querschnittsfläche. Die Behältnisträger 15 bestehen aus einer plattenförmigen Trägerplatte 19, an die an der zu den Führungsschienen 13, 14 zugewandten Seite zwei keilnutförmig ausgebildete Führungsleisten 21, 22 befestigt sind, die die keilförmig ausgebildeten oberen und unteren Randbereiche 16, 17 der Führungsschienen 13, 14 formschlüssig umschließen. Unterhalb der unteren Führungsleiste 22 ist eine Linearverzahnung in Form einer Zahnstange 23 an jeder Trägerplatte 19 angeordnet, die dem Transport der Behältnisträger 15 auf den Führungsschienen 13, 14 dient. An der den Führungsschienen 13, 14 abgewandten Seite ist an jeder Trägerplatte 19 ein Aufnahmeelement 25a bis 25f befestigt. Je nach Anzahl und Format der zu befördernden Behältnisse 10a bis 10f haben die Aufnahmeelemente 25a bis 25f beispielsweise sechs, acht oder zwölf Aussparungen 26a bis 26c (Fig. 4 bis 6), die in regelmäßigen Abständen in den Aufnahmeelementen 25a bis 25f ausgebildet sind, so daß die Länge der Aufnahmeelemente 25a bis 25f stets gleich ist und im wesentlichen der Länge L einer Trägerplatte 19 entspricht. Je nach Anwendungsfall und Gestaltung der Behältnisse 10a bis 10f können die Aufnahmeelemente 25d bis 25f, beispielsweise durch Klemmen 27 oder Absätze 28, 29 (Fig. 7 bis 9) zum Klemmend-, Stehend- oder Hängendtransport von Behältnissen 10a bis 10f verwendet werden.

Zum Schutz gegen seitliches Herausfallen der Behältnisse 10a bis 10f während des Transports aus den Aussparungen 26a bis 26c sind parallel zu den Führungsschienen 13, 14 die Transportbahnen 11, 12 begrenzende Führungsleisten 31 angeordnet. Die Führungsschienen 13, 14 sind an Trägern 32 befestigt, die auf einem Tisch 30 angeordnet sind, der den gesamten Antrieb und die Steuerung der erfindungsgemäßen Vorrichtung enthält. Die Träger 32 haben einen säulenförmigen Sockel 33, an dessen oberen Bereich über ein U-förmiges Winkelstück 34 ein Querarm 36 befestigt ist, der an jeder Seite je eine der Führungsschienen 13, 14 trägt. Unterhalb des Querarms 36 befindet sich ein Transportzahnrad 35a, das mittels einer Welle 37, die durch den Sockel 33 geführt ist, angetrieben wird. Der Durchmesser des Transportzahnrads 35a ist so bemessen, daß es mit seiner Verzahnung 38 gleichzeitig in die Zahnstangen 23 zweier auf den Führungsschienen 13, 14 gegenüber befindlichen Behältnisträger 15 eingreift, so daß bei einer Drehung des Transportzahnrads 35a der eine Behältnisträger 15 in der einen Richtung und der andere Behältnisträger 15 in der Gegenrichtung auf den jeweiligen Führungsschienen 13, 14 gleichzeitig verschoben wird. Zum Schutz gegen Verschmutzung ist der obere Bereich des Trägers 32 mit Verkleidungen 39 abgedeckt.

Im Fall der ausschließlich intermittierenden Förderung von Behältnisträgern 15 auf der Vorrichtung genügen bereits zwei Träger 32 mit entsprechenden Transportzahnrädern 35a, die taktweise und synchron angetrieben werden. Die Träger 32 sind in diesem Fall an den jeweiligen Enden der Führungsschienen 13, 14 angeordnet. Die einzelnen Behältnisträger 15 werden im Verband durch die gerade im Bereich der beiden Transportzahnräder 35 befindlichen Behältnisträger 15 auf den jeweiligen Führungsschienen 13, 14 weitergeschoben. Um die Kräfte an den Transportzahnrädern 35a herabzusetzen, sind jedoch in der Regel und abhängig von der Länge der Führungsschienen 13, 14 mehr als zwei Träger 32 mit Transportzahnrädern 35a zwischen den Führungsschienen 13, 14 angeordnet, die ebenfalls alle taktweise und synchron angetrieben werden.

An die beiden Enden der Führungsschienen 13, 14 schließt sich je eine Umsetzeinrichtung 40 an. Die Umsetzeinrichtungen 40 nehmen je einen Behältnisträger 15 aus einer der Führungsschienen 13, 14 auf, drehen diesen in der Ebene der Führungsschienen 13, 14 um 180°, und geben ihn an die andere der Führungsschienen 13, 14 ab. Da sich beide Umsetzeinrichtungen 40 in der gleichen Richtung, zum Beispiel im Gegenuhrzeigersinn drehen, wird ein Umlaufbetrieb der Behältnisträger 15 auf den Führungsschienen 13, 14 erzielt.

Jede der Umsetzeinrichtungen 40 ist in einer Achse 43 drehbar gelagert und hat zwei mit dieser über Streben 44 verbundene, gegenüberliegend angeordnete Schienenstücke 45 für die Behältnisträger 15. Die Schienenstücke 45, deren Länge etwas größer ist als die Länge L der Trägerplatte 19 der Behältnisträger 15, haben die gleiche Querschnittsfläche wie die Führungsschienen 13, 14, und befinden sich im gleichen Abstand wie diese zueinander, so daß sich die beiden Schienenstücke 45 zur Aufnahme beziehungsweise Abgabe von Behältnisträgern 15 direkt an die Führungsschienen 13, 14 anschließen. Zum Überführen eines Behältnisträgers 15 von einer der Führungsschienen 13, 14 auf eine Umsetzeinrichtung 40 und umgekehrt ist zwischen den Schienenstücken 45 jeder Umsetzeinrichtung 40 zwischen deren Achse 43 und den Führungsschienen 13, 14 ein Umsetzzahnrad 47 ortsfest angeordnet, das mittels eines im Tisch 30 befindlichen Antriebs angetrieben wird. Zum Schutz gegen Herausfallen von Behältnissen 10a bis 10f aus den Behältnisträgern 15 sind an den Umsetzeinrichtungen 40 in Verlängerung der Führungsleisten 31 kreissegmentförmige Führungsplatten 48 angeordnet.

An den den Führungsschienen 13, 14 abgekehrten Seiten schließen sich nahe der Umsetzeinrichtungen 40 Formatwechseleinrichtungen 50 an. Mit Hilfe der Formatwechseleinrichtungen 50 werden Behältnisträger 15 mit jeweils gleichen Aufnahmeelementen 25a bis 25f für verschiedene Behältnisformate bei einem Formatwechsel den Führungsschienen 13, 14 entnommen, magaziniert und bei einem Wechsel auf das ursprüngliche Behältnisformat wieder abgegeben. Die Behältnisträger 15 werden in der Formatwechseleinrichtung 50 in Speicherplätzen 51 magaziniert, deren Aufnahmen 54 beispielsweise wie die Schienenstücke 45 der Umsetzeinrichtungen 40 ausgebildet sind. Die einzelnen Speicherplätze 51, in denen jeweils ein Behältnisträger 15 Platz findet, sind mit einem Band oder einer Kette 52 in Form eines senkrecht zur Vorrichtung ausgebildeten Band- oder Kettenförderes miteinander verbunden, der mittels einer Säule 55 am Tisch 30 befestigt ist. Die Anordnung der Speicherplätze 51 an dem Band- oder Kettenförderer ist so gewählt, daß sich in Verlängerung jeder der beiden Aufnahmeschienen 45 einer Umsetzeinrichtung 40 je ein Speicherplatz 51 befindet. Zum Aufnehmen und Abgeben von Behältnisträgern 15 ist in der Formatwechseleinrichtung 50 ein Formatzahnrad 53 zwischen zwei Speicherplätzen 51 ortsfest angeordnet. Das Formatzahnrad 53, das den gleichen Durchmesser wie die Umsetzzahnräder 47 und die Transportzahnräder 35a hat, bewirkt bei einem Formatwechsel die Übernahme eines Behältnisträgers 15 aus einem ersten Schienenstück 45 einer Umsetzeinrichtung 40 in die Formatwechseleinrichtung 50 bei gleichzeitiger Abgabe eines Behältnisträgers 15 für ein anderes Behältnisformat aus der Formatwechseleinrichtung 50 an das zweite Schienenstück 45 der Umsetzeinrichtung 40. Ist dieser Vorgang abgeschlossen, so werden mittels eines nicht dargestellten Antriebs für den Band- beziehungsweise Kettenförderer die Speicherplätze 51 um eine Stelle, zum Beispiel im Uhrzeigersinn weiterbewegt, um die nächsten Behältnisträger 15 aufzunehmen und abzugeben. Während des Formatwechselvorgangs werden die Schienenstücke 45 der Umsetzeinrichtungen 40 nicht um die Achse 43 gedreht, sondern verbleiben in Verlängerung der Führungsschienen 13, 14. Es wird lediglich das Umsetzzahnrad 47 der Umsetzeinrichtung 40 mit der gleichen Drehrichtung synchron mit den Transportzahnrädern 35a angetrieben.

Ergänzend wird darauf hingewiesen, daß in jeder der beiden Formatwechseleinrichtungen 50 mindestens die Hälfte an Speicherplätzen 51 für Behältnisträger 15 eines einzigen Formats vorzusehen ist. Durch entsprechende Erhöhung der Anzahl an Speicherplätzen 51 ist es aber auch möglich, beispielsweise einen oder mehrere komplette Formatgrößen in einer der Formatwechseleinrichtungen 50 zu magazinieren und durch eine entsprechende Steuerung zu handhaben. Auch ist es denkbar, lediglich eine Formatwechseleinrichtung 50 entsprechender Speicherkapazität an einem Ende der Vorrichtung vorzusehen.

Beim intermittierenden Betrieb der Vorrichtung (Fig. 1) beträgt die Länge der Führungsschienen 13, 14 vorteilhafterweise ein Vielfaches der Länge L eines Behältnisträgers 15. Um die Leistung der Vorrichtung vollständig auszunützen sind weiterhin beide Führungsschienen 13, 14 vollständig mit Behältnisträgern 15 besetzt, und in Verlängerung jeder der Führungsschienen 13, 14 befindet sich in den Umsetzeinrichtungen 40 je ein Behältnisträger 15.

Sowohl die Transportzahnräder 35a als auch die Umsetzzahnräder 47 werden synchron, in derselben Drehrichtung, zum Beispiel im Gegenuhrzeigersinn, und um jeweils denselben Winkelbetrag angetrieben. Der kleinste sinnvolle Fördertakt bewirkt den Weitertransport der Behältnisträger 15 um ein auf ihnen angeordnetes Behältnis 10a bis 10f. Dies kann beispielsweise notwendig sein, wenn an einer Verschließstation nur je ein Behältnis 10a bis 10f zur selben Zeit verschlossen werden kann. Der größtmögliche Fördertakt bewirkt den Weitertransport der Behältnisträger 15 um deren Länge L. Der größtmögliche Fördertakt ist dadurch begrenzt, daß jede der Umsetzeinrichtungen 40 nur jeweils einen Behältnisträger 15 aufnehmen kann. Ist ein Behältnisträger 15 vollständig von einer der Führungsschienen 13, 14 in eine Umsetzeinrichtung 40 gefördert, so setzt die Förderung von Behältnisträgern 15 auf den Führungsschienen 13, 14 während der Zeit des Umsetzens dieses Behältnisträgers 15 von einer auf die andere Führungsschiene 13, 14 aus. Nachdem der Behältnisträger 15 in der Umsetzeinrichtung 40 um die Achse 43 um 180° gedreht wurde, wird er unter Beibehaltung seiner ursprünglichen Bewegungsrichtung in die andere Führungsschiene 13, 14 ausgeschleust, indem das Umsetzzahnrad 47 und die Transportzahnräder 35a wieder angetrieben werden.

In Abwandlung zur ausschließlich intermittierenden Förderung von Behältnisträgern 15 werden bei der Vorrichtung nach Fig. 11 zusätzlich Zonen K kontinuierlicher Förderung geschaffen. In diesen Zonen K werden die Bearbeitungsstationen mit den Behältnisträgern 15 mitbewegt, während in den Zonen I intermittierender Förderung die Bearbeitungsstationen ortsfest an der Vorrichtung angeordnet sind und die Behältnisträger 15 ihnen intermittierend zugefördert werden. Damit können die Bearbeitungszeiten an den Zonen K kontinuierlicher Förderung unabhängig von Bearbeitungszeiten anderer Bearbeitungsstationen verlängert werden, ohne daß es zu Pausen an den Zonen I intermittierender Förderung kommt, so daß die Leistung der Vorrichtung insgesamt erhöht wird.

Im Gegensatz zur intermittierenden Förderung sind beim Beispiel nach Fig. 11 die Führungsschienen 13, 14 nicht vollständig mit Behältnisträgern 15 beschickt. Weiterhin sind zwischen den Führungsschienen 13, 14 in der kontinuierlichen Zone K Transportzahnräder 35b angeordnet, die ständig mit einer konstanten Winkelgeschwindigkeit angetrieben werden, und in einer Übergangszone M Transportzahnräder 35c, die abhängig davon, auf welcher der Führungsschienen 13, 14 diese einen Behältnisträger 15 fördern, entweder eine beschleunigende oder eine verzögernde Drehbewegung ausführen. Gelangen beispielsweise Behältnisträger 15 von der intermittierenden Zone I in die kontinuierliche Zone K, so werden diese in einer Zone M durch die Transportzahnräder 35c auf die geringere Winkelgeschwindigkeit der Transportzahnräder 35b in der kontinuierlichen Zone K verzögert und angepasst. Beim Wiedereintritt in eine Zone I intermittierender Förderung übernehmen die Transportzahnräder 35c die Behältnisträger 15 aus der Zone K kontinuierlicher Förderung und passen diese der Bewegung der Zahnräder 35a der intermittierenden Zone I an. Da die Bewegungsabläufe auf den beiden Führungsschienen 13, 14 spiegelbildlich ablaufen, und ein Transportzahnrad 35c Behältnisträger 15 auf beiden Führungsschienen 13, 14 fördert, die Anforderungen an die Kinematik des Transportzahnrads 35c für Behältnisse auf den beiden Führungsschienen 13, 14 jedoch unterschiedlich sind, befindet sich jeweils nur ein Behältnisträger 15 im Eingriffsbereich eines Transportzahnrads 35c.

Ergänzend sei darauf hingewiesen, daß die erfindungsgemäße Vorrichtung durch die Schaffung weiterer Zonen intermittierender beziehungsweise kontinuierlicher Förderung den Bearbeitungsstationen angepasst werden kann, so daß deren Flexibilität und Leistung bei mehreren hintereinander ablaufenden Bearbeitungsschritten unterschiedlicher Bearbeitungsdauer erhöht wird. Weiterhin ist es möglich, in den Zonen K kontinuierlicher Förderung mehrere Behältnisträger 15 zu puffern, die anschließend mittels entsprechend angesteuerten Transportzahnrädern gemeinsam im Verband in eine Zone I intermittierender Förderung gebracht werden. Dadurch läßt sich die zur Verfügung stehende Bearbeitungszeit für diesen Verband in der intermittierenden Zone I erhöhen, wodurch die Leistung der Vorrichtung ebenfalls erhöht werden kann.

## Patentansprüche

1. Vorrichtung zum intermittierenden Transport von Behältnissen (10a bis 10f) zu mindestens einer Bearbeitungsstation, insbesondere einer Füll- und/oder Verschließstation, mit mehreren die Behältnisse (10a bis 10f) aufnehmenden Behältnisträgern (15) und mit zwei parallelen Führungsschienen (13, 14) für den Vor- und Rücklauf der Behältnisträger (15) sowie mit an deren Enden angeordneten Umsetzeinrichtungen (40) für die Behältnisträger (15), dadurch gekennzeichnet, daß sich die Führungsschienen (13, 14) in einer horizontalen Ebene erstrecken, daß an den Umsetzeinrichtungen (40) Schienenstücke (45) für die Behältnisträger (15) ausgebildet sind, wobei sich die Schienenstücke (45) an die Führungsschienen (13, 14) anschließen und um eine senkrecht zur Förderrichtung der Behältnisträger (15) angeordneten Achse (43) drehbar sind, und daß die Behältnisträger (15) eine in ihrer Förderrichtung sich erstreckende Linearverzahnung (23) aufweisen, die mit in den Führungsschienen (13, 14) angeordneten, angetriebenen Transportzahnrädern (35a bis 35c) in Eingriff kommt.

2. Vorrichtung nach Anspruch 1, dadurch gekennzeichnet, daß längs der Führungsschienen (13, 14) mehrere voneinander unabhängig angetriebene Transportzahnräder (35a bis 35c) zum Transport der Behältnisträger (15) angeordnet sind, und daß die Führungsschienen (13, 14) mindestens eine Zone (K) haben, in denen die Behältnisträger (15) kontinuierlich gefördert werden.

3. Vorrichtung nach Anspruch 1 oder 2, dadurch gekennzeichnet, daß der Durchmesser der Transportzahnräder (35a bis 35c) dem Abstand zwischen den Führungsschienen (13, 14) angepasst ist, so daß die zwischen diesen angeordneten Transportzahnräder (35a bis 35c) gleichzeitig Behältnisträger (15) auf beiden Führungsschienen (13 14) fördern.

4. Vorrichtung nach einem der Ansprüche 1 bis 3, dadurch gekennzeichnet, daß an wenigstens einer Umsetzeinrichtung (40) eine Formatwechseleinrichtung (50) für die Behältnisträger (15) angeordnet ist.

5. Vorrichtung nach Anspruch 4, dadurch gekennzeichnet, daß die Formatwechseleinrichtung (50) nahe der Umsetzeinrichtung (40) auf der den Führungsschienen (13, 14) abgekehrten Seite angeordnet ist.

6. Vorrichtung nach einem der Ansprüche 1 bis 5, dadurch gekennzeichnet, daß die Behältnisträger (15) dem Format und der Anzahl der Behältnisse (10a bis 10f) angepasste Aussparungen (26a bis 26c) und Aufnahmen (27 bis 29) haben.

7. Vorrichtung nach einem der Ansprüche 1 bis 6, dadurch gekennzeichnet, daß die Länge der Führungsschienen (13, 14) ein Vielfaches der Breite (L) eines Behältnisträgers (15) ist.

8. Vorrichtung nach einem der Ansprüche 1 bis 7, dadurch gekennzeichnet, daß die Führungsschienen (13, 14) gegenüberliegende, keilförmig ausgebildete Seiten (16, 17) haben, die in korrespondierende, keilförmig ausgebildete Führungsleisten (21, 22) der Behältnisträger (15) eingreifen.

## Claims

1. Apparatus for transporting containers (10a to 10f) intermittently to at least one processing station, in particular a filling and/or closing station, having a plurality of container carriers (15), which receive the containers (10a to 10f), and having two parallel guide rails (13, 14) for the feed and return of the container carriers (15), and having reversing devices (40) which are arranged at the ends of the guide rails and are intended for the container carriers (15), characterized in that the guide rails (13, 14) extend in a horizontal plane, in that rail pieces (45) for the container carriers (15) are formed on the reversing devices (40), the rail pieces (45) adjoining the guide rails (13, 14) and being rotatable about a spindle (43) arranged perpendicularly with respect to the conveying direction of the container carriers (15), and in that the container carriers (15) have a linear toothing arrangement (23) which extends in the conveying direction of the container carriers and comes into engagement with driven transportation gear wheels (35a to 35c) arranged in the guide rails (13, 14).

2. Apparatus according to Claim 1, characterized in that a plurality of transportation gear wheels (35a to 35c), which are driven independently of one another, are arranged along the guide rails (13, 14) for the purpose of transporting the container carriers (15), and in that the guide rails (13, 14) have at least one zone (K) in which the container carriers (15) are conveyed continuously.

3. Apparatus according to Claim 1 or 2, characterized in that the diameter of the transportation gear wheels (35a to 35c) is adapted to the distance between the guide rails (13, 14), with the result that the transportation gear wheels (35a to 35c), which are arranged between said guide rails, simultaneously convey container carriers (15) on both guide rails (13, 14).

4. Apparatus according to one of Claims 1 to 3, characterized in that a format-changing device (50) for the container carriers (15) is arranged on at least one reversing device (40).

5. Apparatus according to Claim 4, characterized in that the format-changing device (50) is arranged in the vicinity of the reversing device (40), on the side which is remote from the guide rails (13, 14).

6. Apparatus according to one of Claims 1 to 5, characterized in that the container carriers (15) have receiving means (27 to 29) and cutouts (26a to 26c) which are adapted to the format and number of the containers (10a to 10f).

7. Apparatus according to one of Claims 1 to 6, characterized in that the length of the guide rails (13, 14) is a multiple of the width (L) of one container carrier (15).

8. Apparatus according to one of Claims 1 to 7, characterized in that the guide rails (13, 14) have wedge-shaped sides (16, 17) which are located opposite one another and engage in corresponding wedge-shaped guide strips (21, 22) of the container carriers (15).

## Revendications

1. Dispositif de transport intermittent de récipients (10a à 10 f) vers au moins un poste de travail, en particulier un poste de remplissage et/ou un poste de fermeture, dispositif qui comprend plusieurs supports (15), recevant les récipients (10a à 10f) et deux rails de guidage parallèles (13, 14) pour l'aller et le retour des supports de récipients (15) ainsi que des dispositifs de transfert (40), disposés à leurs extrémités, pour les supports des récipients (15),
caractérisé en ce que
• les rails de guidage (13, 14) s'étendent dans un plan horizontal,
• sur les dispositifs de transfert (40) il est constitué des morceaux de rails (45) pour les supports de récipients (15), les morceaux de rails (45) se raccordant aux rails de guidage (13, 14) et pouvant tourner autour d'un axe (43) disposé perpendiculairement au sens d'avancement des supports de récipients (15) et
• les supports de récipients (15) présentent une denture linéaire (23) qui s'étend dans le sens de leur avancement et qui vient en prise avec des roues dentées de transport (35a à 35c), motrices, disposées dans les rails de guidage (13, 14).

2. Dispositif selon la revendication 1,
caractérisé en ce que
• le long des rails de guidage (13, 14) on dispose plusieurs roues de transport (35a à 35c), entraînées indépendamment les unes des autres, qui servent à transporter les supports de récipients (15) et
• les rails de guidage (13, 14) ont au moins une zone (K) dans laquelle on fait avancer les supports de récipients (15) de façon continue.

3. Dispositif selon la revendication 1 ou 2,
caractérisé en ce que
le diamètre des roues dentées de transport (35a à 35c) est adapté à la distance comprise entre les rails de guidage (13, 14), de telle sorte que les roues dentées de transport (35a à 35c), qui sont disposées entre ceux-ci, font avancer en même temps les supports de récipients (15) sur les deux rails de guidage (13, 14).

4. Dispositif selon l'une des revendications 1 à 3,
caractérisé en ce que
sur au moins un dispositif de transfert (40) on dispose un dispositif de changement de format (50) pour les supports de récipients (15).

5. Dispositif selon la revendication 4,
caractérisé en ce que
le dispositif de changement de format (50) est disposé à proximité du dispositif de transfert (40) sur le côté qui est situé à l'opposé des rails de guidage (13, 14)

6. Dispositif selon l'une des revendications 1 à 5,
caractérisé en ce que
les supports de récipients (15) ont des évidements (26a à 26c), et des logements (27 à 29) qui sont adaptés au format et au nombre des récipients (10a à 10f).

7. Dispositif selon l'une des revendications 1 à 6,
caractérisé en ce que
la longueur des rails de guidage (13, 14) est un multiple de la largeur (L) d'un support de récipients (15).

8. Dispositif selon l'une des revendications 1 à 7,
caractérisé en ce que
les rails de guidage (13, 14) ont des côtés opposés (16, 17) constitués en forme de coin qui viennent en prise dans des barres de guidage correspondantes (21, 22) des supports de récipients (15), correspondantes, constituées en forme de coin.
